# EUROPÄISCHE PATENTSCHRIFT

(11) **EP 0 532 924 B1**
(45) Veröffentlichungstag und Bekanntmachung des Hinweises auf die Patenterteilung: **11.10.1995**
(21) Anmeldenummer: 92114170.1
(22) Anmeldetag: 20.08.1992
(51) Int. Cl.: F16H 63/20

(54) **Schaltvorrichtung für ein Geschwindigkeitswechselgetriebe eines Kraftfahrzeugs**
Gear shift device for a gearbox of a motor vehicle
Dispositif de changement de vitesses pour une boîte de vitesses d'une véhicule automobile

(30) Priorität: 19.09.1991 DE 4131162
(43) Veröffentlichungstag der Anmeldung: 24.03.1993
(73) Patentinhaber: Dr.Ing.h.c. F. Porsche Aktiengesellschaft, 70435 Stuttgart (DE)
(72) Erfinder: Knape, Dieter, W-7100 Heilbronn (DE)

(56) Entgegenhaltungen:
- DE-A- 1 480 679
- DE-A- 2 750 275
- GB-A- 2 026 109
- US-A- 4 476 738
- US-A- 4 543 846

## Beschreibung

Die Erfindung betrifft ein synchronisiertes Geschwindigkeitswechselgetriebe eines Kraftfahrzeugs mit einer Schaltvorrichtung nach dem Oberbegriff des Anspruchs 1.

Ein derartiges Geschwindigkeitswechselgetriebe ist aus der DE-A-14 80 679 bekannt. Eine im Getriebegehäuse längs- und drehbeweglich gelagerte Schaltwelle greift mit einem Mitnehmer je nach Vorwählstellung in einen von drei Schalthebeln ein. Die Schalthebel sind mit zwei im Getriebegehäuse parallel zur Schaltwelle gelagerten Schwinggabeln über zwei an ihnen angelenkte Schubstangen verbunden. Eine dritte Schwinggabel ist mit dem unmittelbar über ihr befindlichen Schalthebel direkt trieblich verbunden. Durch Drehen der Schaltwelle wird die gewählte Schwinggabel ebenfalls gedreht und schaltet durch Eingreifen in eine Synchronisierkupplung den ihr zugeordneten Getriebegang. Durch Längsverschieben der Schaltwelle in Nuten der Schalthebel werden die Getriebegänge vorgewählt.

Aus der GB-A-026 109 ist ein Geschwindigkeitswechselgetriebe bekannt, bei dem drei Synchronisierkupplungen auf einer Getriebewelle geführt und von Schwinggabeln verschiebbar sind. Jede dieser Schwinggabeln ist mit einer im Getriebegehäuse längsbeweglich geführten Schubstange verbunden. Diese drei Schubstangen weisen miteinander fluchtende Nuten auf, in die der Schaltfinger einer Schaltwelle eingreift.

Es ist die Aufgabe der Erfindung, ein derartiges Geschwindigkeitswechselgetriebe zu vereinfachen und die Gangschaltung durch Verminderung der Zahl der Einzelteile kostengünstiger und funktionssicherer zu gestalten.

Zur Lösung dieser Aufgabe dienen die kennzeichnenden Merkmale des Anspruchs 1. Ein Schaltfinger der Schaltwelle wirkt unmittelbar mit Schaltlaschen zusammen, die an Schwinggabeln befestigt und an einer Führungsschiene einer Schaltstange längsgeführt sind; weitere zwischenliegende Getriebeteile sind entbehrlich.

Die Schaltstange ist im Getriebegehäuse senkrecht zur Schaltwelle gelagert.

Auf dieser Schaltstange ist in vorteilhafter Ausgestaltung der Erfindung endseitig die Schaltgabel für den Rückwärtsgang befestigt.

Bei Ausführung des Getriebes mit Overdrive ist die Schwinggabel der Getriebegänge G5/G6 ersetzt durch eine auf der Schaltstange drehbar und längsverschieblich gelagerte Schaltgabel. Mit äußerst geringen Umbaukosten kann mit derselben Getriebekonzeption ein normales 6-Gang-Getriebe oder ein Getriebe mit Overdrive realisiert werden.

Ein Ausführungsbeispiel der Erfindung ist in der Zeichnung dargestellt und wird nachfolgend erläutert.

Es zeigen:

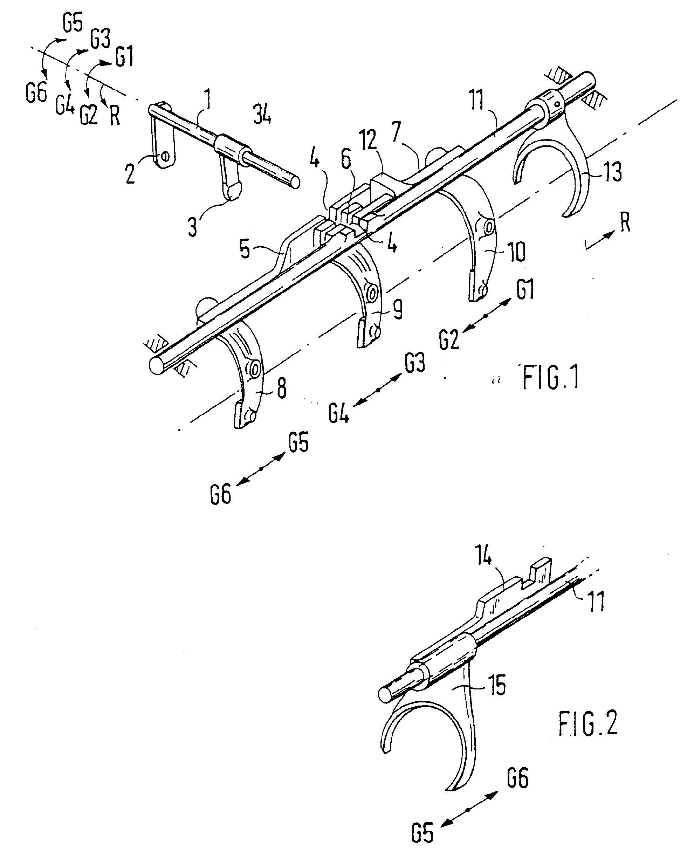

- Fig. 1: räumliche Darstellung der Wirkungsweise einer Gangschaltung,
- Fig. 2: Schaltgabel bei Overdrive-Ausführung,
- Fig. 3: Getriebe mit Gangschaltung im Längsschnitt,
- Fig. 4: Längsschnitt nach Linie IV-IV der Fig. 3,
- Fig. 5: Querschnitt nach Linie V-V der Fig. 3,

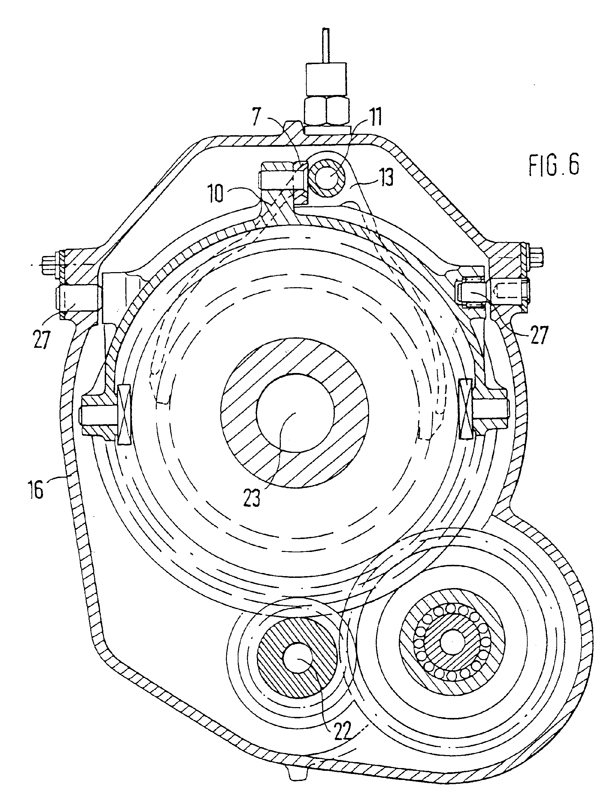

- Fig. 6: Querschnitt nach Linie VI-VI der Fig. 3.

Eine Schaltwelle 1 ist längsverschieblich und drehbar gelagert; sie ist mit einem Hebel 2 von außen betätigbar. Ein an der Schaltwelle 1 befestigter Schaltfinger 3 ist in die zueinander fluchtenden Nuten 4 von drei zueinander parallel geführten Schaltlaschen 5, 6, 7 einführbar. Die Schaltlaschen 5 und 7 sind an Schwinggabeln 8 und 10 angelenkt, die im Getriebegehäuse gelagert sind und durch Verschwenken die Gänge G5 und G6, sowie G2 und G1 schalten. zur Längsführung der Schaltlaschen 5, 7 dient eine an einer Schaltstange 11 angebrachte Führungsschiene 12. Zusätzlich sind die Schaltlaschen 5 bzw. 7 der Gänge G6 und G5 bzw. G2 und G1 an der mittleren Schaltlasche 6 der Gänge G4/G3 längsgeführt.

Am einen Ende der Schaltstange 11 ist eine Schaltgabel 13 für den Rückwärtsgang R befestigt. Nahe dem anderen Ende der Schaltstange 11 ist die Schwinggabel 8 angeordnet, die bei Overdrive-Ausführung durch eine auf der Schaltstange 11 gelagerte und durch eine Schaltlasche 14 betätigte Schaltgabel 15 ersetzt ist.

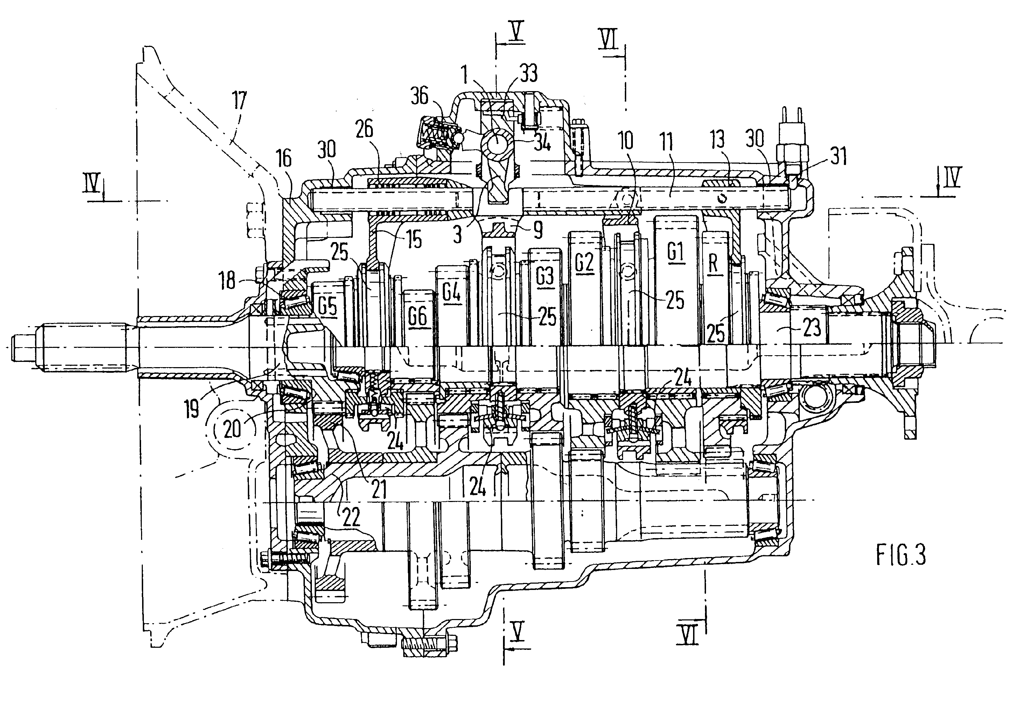

Eine Gangschaltung für ein Overdrive-Getriebe ist in Fig. 3 an einem 6-Gang-Getriebe realisiert. Alle Gangübersetzungen gehen bei Overdrive etwas stärker ins Schnelle als bei Normalausführung. Ein Getriebegehäuse 16 ist an einer Kupplungsglocke 17 des Motors angeflanscht. Auf der vom Motor kommenden, im Getriebegehäuse 16 mit einem Kegelrollenlager 18 gelagerten Antriebswelle 19 ist ein Zahnrad 20 für den fünften Getriebegang G5 fest angebracht. Es kämmt dauernd mit einem Festrad 21 einer zur Antriebswelle 19 parallelen Vorgelegewelle 22. Auf der Vorgelegewelle 22 sind in dieser Reihenfolge auch die Festräder des 6. Ganges G6, des vierten Ganges G4, des 3. Ganges G3, des 2. Ganges G2, des 1. Ganges G1 sowie des Rückwärtsganges R angeordnet. Die zugehörigen Losräder dieser Getriebegänge sind auf einer zur Antriebswelle 19 koaxialen, in ihr gelagerten Abtriebswelle 23 gelagert. Die Gänge G5/G6, G4/G3 sowie G2/G1 sind durch zwischen ihnen liegende Synchronisierkupplungen 24 schaltbar, wobei in die Schaltmuffen 25 der Synchronisierkupplungen 24 Schaltgabeln bzw. Schwinggabeln formschlüssig eingreifen. Über das Zahnradpaar 20, 21 wird die Vorgelegewelle 22 ständig angetrieben. Durch Betätigen einer der Synchronisierkupplungen wird auch die Abtriebswelle 23 in Umdrehung versetzt und läuft je nach geschaltenem Gang mit der entsprechenden Drehzahl um. Bei Schalten des fünften Ganges G5 läuft die Abtriebswelle 23 mit gleicher Drehzahl wie die Antriebswelle 19.

Da die Gänge G5/G6 bei Normalausführung des Getriebes mit einer Schwinggabel 8, bei Overdrive-Ausführung mit einer Schaltgabel 15 geschaltet werden, wird jeweils durch Bewegen der Schaltlasche nach links der fünfte Gang, durch Bewegen der Schaltgasse nach rechts der sechste Gang geschaltet, ohne daß die Gangschaltvorrichtung weiter verändert werden muß. Es sind lediglich die Radsätze für G5/G6 zu vertauschen; anstelle der Schwinggabel 8 ist eine Schaltgabel 15 zu verwenden.

Die Schaltgabel 15 ist in Nadellagern 26 auf der Schaltstange 11 gelagert. Die Schwinggabel 8 ist wie auch alle anderen Schwinggabeln an zwei koaxialen Zapfen 27 im Getriebegehäuse 16 schwenkbar gelagert. Eine an ihr angelenkte Schaltlasche 5 ist an einer Führungsschiene 12 der Schaltstange 11 und in einer Nut 28 der mittigen Schaltlasche 6 der Gänge G4/G3 längsgeführt. In einer parallelen Nut 29 der Schaltlasche 6 ist die Schaltlasche 7 der Gänge G2/G1 längsgeführt. Die Schaltgabel 13 für den Rückwärtsgang R ist mit der Schaltstange 11 verstiftet. Zur Vorwahl des Rückwärtsganges R wird der Schaltfinger 3 in die Nut 4 der Schaltstange 11 vorgeschoben. Durch Verdrehen der Schaltwelle 1 wird dann die Schaltstange 11 längsverschoben und der Rückwärtsgang R geschaltet.

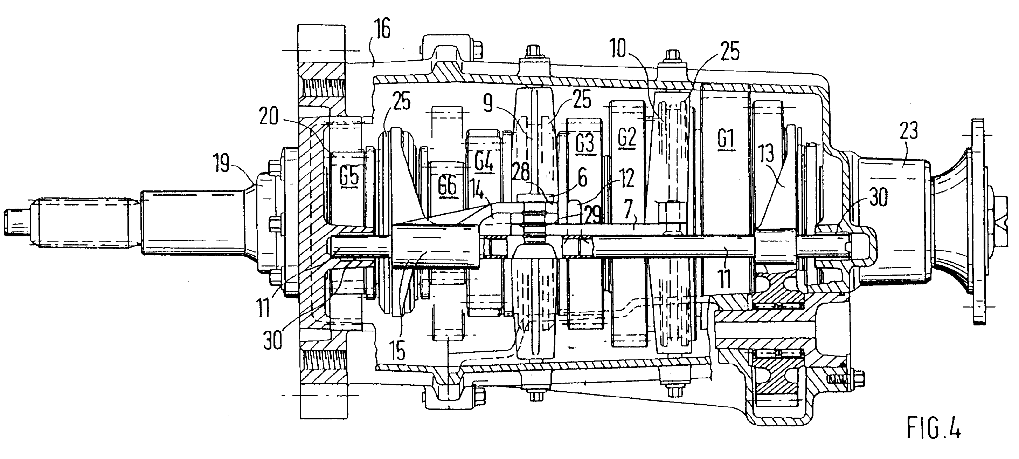

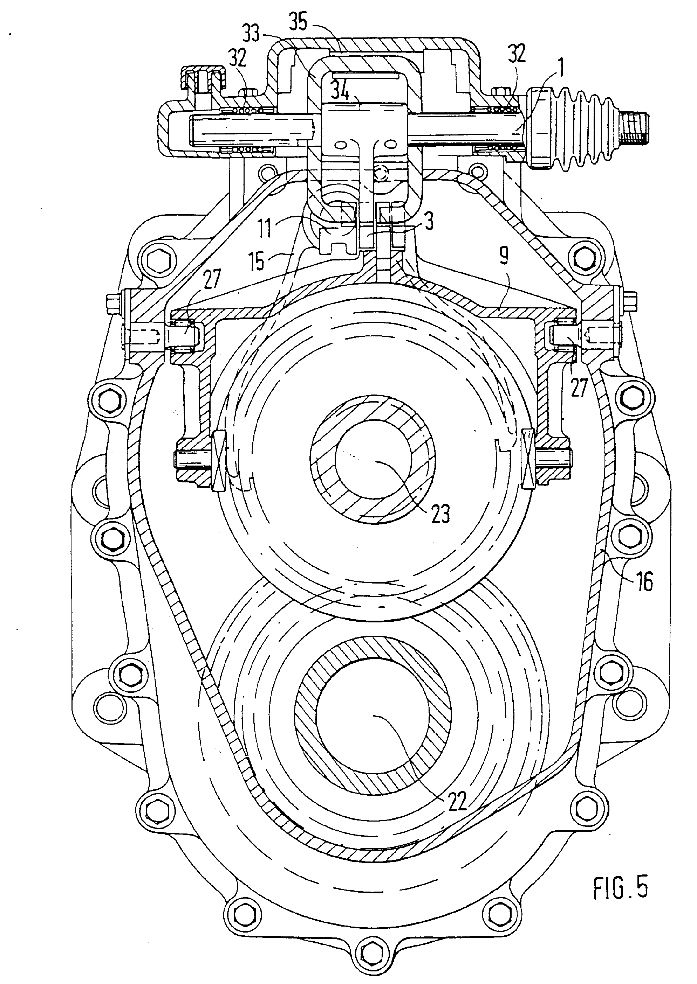

Wie die Fig. 3 bis 5 zeigen, ist die Schaltstange 11 beidseitig im Getriebegehäuse 16 in Gleitlagern 30 gelagert. Ihre Längsstellung wird durch einen Sensor 31 erfaßt. Die zur Schaltstange 11 senkrechte Schaltwelle 1 ist im Getriebegehäuse 16 beidseitig in Nadellagern 32 gelagert. Ihre drei Drehstellungen sind durch Eingreifen eines Federstiftes 36 in ein Rastprofil der Schaltwelle 1 arretierbar. Um zu vermeiden, daß beim Schalten eines Getriebeganges zugleich ein benachbarter Gang geschaltet wird, ist ein Sperrbügel 33 vorgesehen. Der Sperrbügel 33 liegt an beiden Stirnseiten an der Nabe 34 des Schaltfingers 3 an. Er macht die Längsbewegungen des Schaltfingers 3 mit und greift in die Schaltlaschen der nicht zu schaltenden Getriebegänge formschlüssig ein. Die Schwinggabeln dieser Getriebegänge sind so gegen Verdrehen gesichert. Der Schaltfinger 3 durchgreift den Sperrbügel 33. In einem Schlitz 4 des Sperrbügels 33 ist er soweit frei drehbar, um den angewählten Getriebegang schalten zu können. In einer parallel zur Schaltwelle 1 verlaufenden Längsnut 35 des Getriebegehäuses 16 ist der Sperrbügel 33 in Längsrichtung geführt und gegen Verdrehen gesichert.

## Patentansprüche

1. Synchronisiertes Geschwindigkeitswechselgetriebe eines Kraftfahrzeugs mit einer Schaltvorrichtung, wobei einige Vorwärtsgänge mit in Synchronisierkupplungen eingreifenden, im Getriebegehäuse schwenkbar gelagerten Schwinggabeln schaltbar sind und im Getriebegehäuse parallel zur Lagerachse der Schwinggabeln eine Schaltwelle längsverschieblich und drehbar gelagert ist, dadurch gekennzeichnet, daß an der Schaltwelle (1) ein Schaltfinger (3) befestigt ist, der mit an den Schwinggabeln (8, 9, 10) befestigten Schaltlaschen (5, 6, 7) in der Weise zusammenwirkt, daß durch sein Längsverschieben in den zueinander fluchtenden Nuten (4) der Schaltlaschen (5, 6, 7). die Getriebegänge vorwählbar und durch Verdrehen des Schaltfingers (3) die Getriebegänge schaltbar sind, und daß die Schaltlaschen an einer Führungsschiene (12) der Schaltstange (11) längsgeführt sind.

2. Synchronisiertes Geschwindigkeitswechselgetriebe nach Anspruch 1, dadurch gekennzeichnet, daß mindestens drei Schaltlaschen (5, 6, 7) vorgesehen sind, und daß an einer mittleren Schaltlasche (6) die anderen Schaltlaschen (5, 7) längsgeführt sind.

3. Synchronisiertes Geschwindigkeitswechselgetriebe nach Anspruch 1, dadurch gekennzeichnet, daß die Schwinggabel (8) der höchsten Vorwärtsgänge bei Overdrive-Ausführung des Getriebes ersetzt ist durch eine Schaltgabel (15), die auf der Schaltstange (11) längsverschieblich und drehbar gelagert ist.

4. Synchronisiertes Geschwindigkeitswechselgetriebe nach Anspruch 1, dadurch gekennzeichnet, daß der Rückwärtsgang (R) mit einer Schaltgabel (13) betätigbar ist, die endseitig auf der Schaltstange (11) befestigt ist.

5. Synchronisiertes Geschwindigkeitswechselgetriebe nach Anspruch 1, dadurch gekennzeichnet, daß die Führungsschiene (12) an der Schaltstange (11) angeschmiedet ist.

6. Synchronisiertes Geschwindigkeitswechselgetriebe nach Anspruch 1, dadurch gekennzeichnet, daß die Schaltlaschen an den Schwinggabeln (8, 10) angelenkt sind.

7. Synchronisiertes Geschwindigkeitswechselgetriebe nach Anspruch 1, dadurch gekennzeichnet, daß der Schaltfinger (3) von einem Sperrbügel (33) umgeben ist und ihn durchgreift, wobei der Sperrbügel (33) in Achsrichtung der Schaltwelle (1) längsbeweglich geführt ist, in Drehrichtung arretiert ist, und an beiden Stirnseiten einer den Schaltfinger (3) führenden Nabe (34) anliegt.

8. Synchronisiertes Geschwindigkeitswechselgetriebe nach Anspruch 7, dadurch gekennzeichnet, daß der Sperrbügel (33) in einer Längsnut (33) des Getriebegehäuses (16) längsgeführt und gegen Verdrehen gesichert ist.

## Claims

1. A synchronized gear-change transmission of a motor vehicle having a gear-shift device, wherein some forward gears are shiftable with oscillating forks engaging in synchronizing clutches and mounted pivotably in the transmission housing and a gear-shift shaft is mounted longitudinally displaceably and rotatably in the transmission housing parallel to the bearing axis of the oscillating forks, **characterized in that** a gear-shift finger (3) is secured to the gear-shift shaft (1), the gear-shift finger (3) cooperating with gear-shift plates (5, 6, 7) secured to the oscillating forks (8, 9, 10) in such a way that the gears of the transmission are pre-selectable by the longitudinal displacement of the gear-shift finger (3) in the mutually aligned grooves (4) in the gear-shift plates (5, 6, 7) and the gears of the transmission are shiftable by rotating the gear-shift finger (3), and the gear-shift plates are guided longitudinally on a guide rail (12) of the gear-shift rod (11).

2. A synchronized gear-change transmission according to Claim 1, **characterized in that** at least three gear-shift plates (5, 6, 7) are provided, and one of the middle gear-shift plates (6) has the other gear-shift plates (5, 7) guided thereon.

3. A synchronized gear-change transmission according to Claim 1, **characterized in that** the oscillating fork (8) of the highest forward gears is replaced in an overdrive design of the transmission by a gear-shift fork (15) mounted longitudinally displaceably and rotatably on the gear-shift rod (11).

4. A synchronized gear-change transmission according to Claim 1, **characterized in that** the reverse gear (**R**) is actuable by a gear-shift fork (13) secured to the end of the gearshift rod (11).

5. A synchronized gear-change transmission according to Claim 1, **characterized in that** the guide rail (12) is forged onto the gear-shift rod (11).

6. A synchronized gear-change transmission according to Claim 1, characterized in that the gear-shift plates are articulated to the oscillating forks (8, 10).

7. A synchronized gear-change transmission according to Claim 1, **characterized in that** the gear-shift finger (3) is surrounded by a locking yoke (33) and extends therethrough, wherein the locking yoke (33) is guided longitudinally movably in the axial direction of the gear-shift shaft (1), is locked in the direction of rotation and rests against the two front faces of a hub (34) guiding the gear-shift finger (3).

8. A synchronized gear-change transmission according to Claim 7, **characterized in that** the locking yoke (33) is guided longitudinally in a longitudinal groove (35) in the transmission housing (16) and is prevented from rotating.

## Revendications

1. Dispositif de changement de vitesses synchronisé pour un véhicule automobile, avec un dispositif de manoeuvre, quelques rapport de vitesse en marche avant pouvant être enclenchés à l'aide de fourchettes oscillantes, s'engageant dans des couplages de synchronisation, pouvant pivoter dans le carter de boîtier de vitesse, et un arbre de manoeuvre étant monté dans le carter de boîte de vitesse, de façon à pouvoir se déplacer parallèlement par rapport à l'axe de tourillonnement des fourchettes oscillantes et à pouvoir tourner, caractérisé en ce que, sur l'arbre de manoeuvre (1) est fixé un doigt de manoeuvre (3), coopérant avec des pattes de manoeuvre (5, 6, 7) fixées sur les fourchettes oscillantes (8, 9, 10), de manière qu'au moyen de son déplacement longitudinal dans les rainures (4) alignées vis à vis de lui, des pattes de manoeuvre (5, 6, 7), les rapport de vitesse puissent être présélectionnés et puissent être enclenchés, par rotation du doigt de manoeuvre (3), et en ce que les pattes de manoeuvre sont guidées longitudinalement sur une glissière de guidage (12) de la tige de manoeuvre (11).

2. Dispositif de changement de vitesses synchronisé selon la revendication 1, caractérisé en ce qu'au moins trois pattes de manoeuvre (5, 6, 7) sont prévues et en ce que les autres pattes de manoeuvre (5, 7) sont guidées longitudinalement sur une patte de manoeuvre (6) médiane.

3. Dispositif de changement de vitesses synchronisé selon la revendication 1, caractérisé en ce que, lorsque la boîte de vitesse est conçue avec une surmultipliée, la fourchette oscillante (8) du plus haut rapport de vitesse est remplacée par une fourchette de manoeuvre (15), déplaçable longitudinalement et pouvant tourner sur la tige de manoeuvre (11).

4. Dispositif de changement de vitesses synchronisé selon la revendication 1, caractérisé en ce que la marche arrière (R) peut être actionnée à l'aide d'une fourchette de manoeuvre (13), fixée coté extrémité sur la tige de manoeuvre (11).

5. Dispositif de changement de vitesses synchronisé selon la revendication 1, caractérisé en ce que la glissière de guidage (12) est réalisée d'un seul tenant, par forgeage, sur la tige de manoeuvre (11).

6. Dispositif de changement de vitesses synchronisé selon la revendication 1, caractérisé en ce que les pattes de manoeuvre sont articulées sur les fourchettes oscillantes (8, 10).

7. Dispositif de changement de vitesses synchronisé selon la revendication 1, caractérisé en ce que le doigt de manoeuvre (3) est entouré par un étrier de blocage (33) et le traverse, l'étrier de blocage (33) étant guidé de façon à pouvoir se déplacer longitudinalement dans la direction axiale de l'arbre de manoeuvre (1), en étant bloqué en rotation, et en appuyant sur un moyeu (34) guidant sur les deux faces frontales l'un des doigts de manoeuvre (3).

8. Dispositif de changement de vitesses synchronisé selon la revendication 1, caractérisé en ce que l'étrier de blocage (33) est guidé longitudinalement dans une rainure longitudinale (33) du carter de boîte de vitesse (16) et est bloqué en rotation.
